(19) Europäisches Patentamt / European Patent Office / Office européen des brevets

(11) **EP 4 712 598 A1**

(12) **EUROPEAN PATENT APPLICATION**
published in accordance with Art. 153(4) EPC

(43) Date of publication:
**18.03.2026  Bulletin 2026/12**

(21) Application number: **24807482.5**

(22) Date of filing: **10.05.2024**

(51) International Patent Classification (IPC):
**H04W 56/00** $^{(2009.01)}$  **H04W 72/0457** $^{(2023.01)}$
**H04W 72/1268** $^{(2023.01)}$  **H04W 72/231** $^{(2023.01)}$
**H04W 72/232** $^{(2023.01)}$  **H04B 7/0413** $^{(2017.01)}$
**H04B 7/06** $^{(2006.01)}$  **H04L 5/00** $^{(2006.01)}$

(52) Cooperative Patent Classification (CPC):
**H04B 7/0413; H04B 7/06; H04L 5/00; H04W 56/00;
H04W 72/0457; H04W 72/1268; H04W 72/231;
H04W 72/232**

(86) International application number:
**PCT/KR2024/006417**

(87) International publication number:
**WO 2024/237611 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **12.05.2023  KR 20230061857**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **KANG, Jiwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD FOR UPLINK TRANSMISSION AND RECEPTION, AND DEVICE THEREFOR**

(57)    A method performed by a user equipment (UE) according to an embodiment of the present disclosure includes receiving configuration information related to a serving cell, receiving downlink control information (DCI) for scheduling of a physical uplink shared channel (PUSCH), and transmitting the PUSCH based on an uplink timing which is related to one of a first timing advance group (TAG) and a second TAG. A TAG related to the uplink timing is determined based on a sounding reference signal (SRS) resource.

【FIG. 3】

```
                    Start
                      │
        ┌─────────────▼─────────────┐
        │ Receive configuration      │
        │ information related to      ├── S310
        │ serving cell                │
        └─────────────┬─────────────┘
                      │
        ┌─────────────▼─────────────┐
        │       Receive DCI           ├── S320
        └─────────────┬─────────────┘
                      │
        ┌─────────────▼─────────────┐
        │       Transmit PUSCH        ├── S330
        └─────────────┬─────────────┘
                      │
                     End
```

EP 4 712 598 A1

## Description

[TECHNICAL FIELD]

The present disclosure relates to a method and device for uplink transmission and reception.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. To support TRP-specific TA (i.e., to support two TAs for two TRPs), two TAGs may be configured within one serving cell.

However, in an environment where a unified TCI framework, such as Rel-15/16, is not utilized, it is unclear how TAGs should be connected/indicated for uplink transmission. For example, if two TAGs are managed in a specific CC/BWP based on Rel-15/16, it may be unclear how the TAG for uplink transmission should be determined.

[DISCLOSURE]

[TECHNICAL PROBLEM]

As described above, when two TAGs are managed in a specific CC/BWP where a unified TCI framework is not utilized, there is a problem in which the TAG for uplink transmission is ambiguous. An object of the present disclosure is to propose a method for solving the above-described problem.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) according to an embodiment of the present disclosure comprises receiving configuration information related to a serving cell, receiving downlink control information (DCI) for scheduling of a Physical Uplink Shared CHannel (PUSCH), and transmitting the PUSCH based on an uplink timing which is related to one of a first Timing Advance Group (TAG) and a second TAG. The configuration information includes an ID of the first TAG and an ID of the second TAG. A TAG related to the uplink timing is determined based on a Sounding Reference Signal (SRS) resource.

The TAG related to the uplink timing may be determined based on i) the SRS resource, ii) a Physical Uplink Control CHannel (PUCCH) resource, iii) an SRS resource indicator field of the DCI, or iv) a TAG configuration related to the PUSCH.

The TAG related to the uplink timing may be associated with spatial relation info for the SRS resource.

The SRS resource may be i) an SRS resource based on the SRS resource indicator field or ii) an SRS resource related to a configured grant.

The TAG related to the uplink timing may be determined based on an ID of a TAG mapped to a codepoint of the SRS resource indicator field.

The TAG related to the uplink timing may be associated with spatial relation info for the PUCCH resource.

The DCI may be based on DCI format 0_0. The PUCCH resource may have a lowest ID within an active uplink (UL) BandWidth Part (BWP). \

The DCI may be based on DCI format 0 0. An ID of a TAG for the PUSCH scheduled based on the DCI format 0_0 may be indicated based on the TAG configuration.

The PUSCH may be transmitted based on spatial relation info for the SRS resource or a PUCCH resource.

A unified transmission configuration indication (TCI) state may not be configured in the serving cell.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories.

The one or more memories store instructions that, based on being executed by the one or more processors, configure the one or more processors to perform all steps of any one of the methods.

One or more non-transitory computer readable mediums according to another embodiment of the present disclosure stores instructions. The instructions executable by one or more processors configure the one or more processors to perform all steps of any one of the methods.

A method performed by a base station according to another embodiment of the present disclosure comprises transmitting configuration information related to a serving cell, transmitting downlink control information (DCI) for scheduling of a Physical Uplink Shared CHannel (PUSCH), and receiving the PUSCH based on an uplink timing which is related to one of a first Timing Advance Group (TAG) and a second TAG. The configuration information includes an ID of the first TAG and an ID of the second TAG. A TAG related to the uplink timing is determined based on a Sounding Reference Signal (SRS) resource.

A base station according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

[ADVANTAGEOUS EFFECTS]

According to embodiments of the present disclosure, a TAG related to uplink timing is determined based on i) sounding reference signal (SRS) resources or physical uplink control channel (PUCCH) resources, ii) an SRS resource indicator field of DCI, or iii) TAG configuration related to PUSCH scheduling. Therefore, ambiguity related to the uplink timing determination can be resolved, and the reliability of M-TRP based communication can be improved.

Since the TAG is determined based on existing information utilized for uplink transmission, the complexity of UE/base station implementation required to support uplink transmission and reception based on two TAGs can be minimized.

Even for a CC/BWP or a UE that do not support a unified TCI state, uplink transmission can be performed based on a more appropriate timing for one of multiple TRPs. Therefore, backward compatibility of uplink transmission and reception operations based on the two TAGs can be improved.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[DESCRIPTION OF THE DRAWINGS]

FIG. 1 illustrates MAC RAR according to an embodiment of the present disclosure.
FIG. 2 illustrates a timing advance command MAC CE according to an embodiment of the present disclosure.
FIG. 3 is a flowchart illustrating a method performed by a UE according to an embodiment of the present disclosure.
FIG. 4 is a flowchart illustrating a method performed by a base station according to another embodiment of the present disclosure.
FIG. 5 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g., ID), etc. for distinguishing CORESETs for each TRP/panel. In addition, the CORESET group may be a group/union of CORESETs classified by indexes/identification information (e.g., ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), $q\_d$: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be based on Table 1 below.

[Table 1]

| |
|---|
| Uplink frame number *i* for transmission from the UE shall start $$T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$$ before the start of the corresponding downlink frame at the UE where<br>- $N_{\mathrm{TA}}$ and $N_{\mathrm{TA,offset}}$ are given by clause 4.2 of [5, TS 38.213], except for msgA transmission on PUSCH where $N_{\mathrm{TA}} = 0$ shall be used;<br>- $N_{\mathrm{TA,adj}}^{\mathrm{common}}$ given by clause 4.2 of [5, TS 38.213] is derived from the higher-layer parameters *TACommon, TACommonDrift,* and *TACommonDriftVariation* if configured, otherwise $N_{\mathrm{TA,adj}}^{\mathrm{common}} = 0$ ;<br>- $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$ . |

In Table 1, $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$$N_{\mathrm{TA,offset}}$$

Case 1) Method of configuring a specific value per serving cell

For example, a UE may receive configuration information (e.g., ServingCellConfigCommon Information) including information on NTA,offset from a base station. The configuration information may be received based on RRC signaling. Table 2 below shows the configuration information.

73] 【Table 2】

---

&ndash; *ServingCellConfigCommon*

The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.

**ServingCellConfigCommon information element**

-- ASN1START

-- TAG-SERVINGCELLCONFIGCOMMON-START

```
ServingCellConfigCommon ::=          SEQUENCE {
      physCellId                                      PhysCellId
OPTIONAL,     -- Cond HOAndServCellAdd,
      downlinkConfigCommon                            DownlinkConfigCommon
OPTIONAL,     -- Cond HOAndServCellAdd
      uplinkConfigCommon                              UplinkConfigCommon
OPTIONAL,     -- Need M
      supplementaryUplinkConfig                       UplinkConfigCommon
OPTIONAL,     -- Need S
      n-TimingAdvanceOffset              ENUMERATED  {  n0,  n25600,  n39936  }
OPTIONAL,     -- Need S
                                       (...)
}
```

---

-- TAG-SERVINGCELLCONFIGCOMMON-STOP

-- ASN1STOP

---

***n-TimingAdvanceOffset***

The $N\_TA$-Offset to be applied for all uplink transmissions on this serving cell. If the field is absent, the UE applies the value defined for the duplex mode and frequency range of this serving cell. See TS 38.133 [14], table 7.1.2-2.

---

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 3 below shows the value of $N_{TA,offset}$.

【Table 3】

<table>
<tr><td colspan="2" align="center"><b>Table 7.1.2-2: The Value of</b> $N_{\text{TA offset}}$</td></tr>
<tr><td align="center"><b>Frequency range and band of cell used for uplink transmission</b></td><td align="center">$N_{\text{TA offset}}$ <b>(Unit: T$_C$)</b></td></tr>
<tr><td>FR1 FDD or TDD band with neither E-UTRA–NR nor NB-IoT–NR coexistence case</td><td>25600 (Note 1)</td></tr>
<tr><td>FR1 FDD band with E-UTRA–NR and/or NB-IoT–NR coexistence case</td><td>0 (Note 1)</td></tr>
<tr><td>FR1 TDD band with E-UTRA–NR and/or NB-IoT–NR coexistence case</td><td>39936 (Note 1)</td></tr>
<tr><td>FR2</td><td>13792</td></tr>
<tr><td colspan="2">[1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.<br><br>[2] Note 2: Void</td></tr>
</table>

$N_{TA}$

Case 1) Method of configuring through a random access response (RAR)

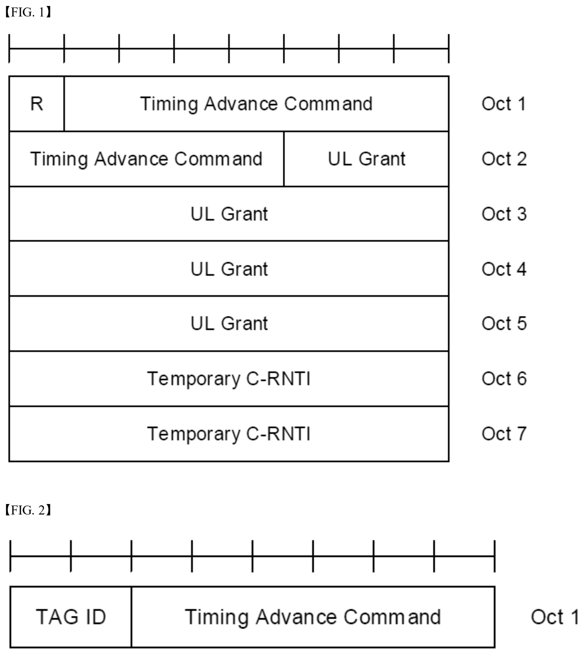

For example, in a random access procedure (e.g., 2-step RACH procedure or 4-step RACH procedure), a UE may receive an RAR from a base station. $N_{TA}$ may be determined/configured based on the RAR. Specifically, the RAR may include a timing advance command. The timing advance command indicates an index value (e.g., index value TA) related to timing adjustment. $N_{TA}$ may be determined based on the index value (see Table 5 below). The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. Table 4 below shows MAC payload of the MAC RAR.

[Table 4]

<table>
<tr><td>6.2.3 MAC payload for Random Access Response<br>
The MAC RAR is of fixed size as depicted in Figure 6.2.3-1, and consists of the following fields:<br>
    - R: Reserved bit, set to 0;<br>
    - TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;<br>
    - Timing Advance Command: The Timing Advance Command field indicates the index value $T_A$ used to control the amount of timing adjustment that the MAC entity has to apply in TS 38.213 [6]. The size of the Timing Advance Command field is 12 bits;<br>
    - UL Grant: The Uplink Grant field indicates the resources to be used on the uplink in TS 38.213 [6]. The size of the UL Grant field is 27 bits;<br>
    - Temporary C-RNTI: The Temporary C-RNTI field indicates the temporary identity that is used by the MAC entity during Random Access. The size of the Temporary C-RNTI field is 16 bits.<br>
The MAC RAR is octet aligned.</td></tr>
</table>

Table 5 below shows transmission timing adjustments based on the timing advance command.

[Table 5]

4.2 Transmission timing adjustments

A UE can be provided a value $N_{TA,offset}$ of a timing advance offset for a serving cell by *n-TimingAdvanceOffset* for the serving cell. If for a serving cell the UE is provided two *coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset* and *n-TimingAdvanceOffset2* for transmissions with TCI states associated with the first and second CORESETs, respectively. A UE can be *provided a second $N_{TA,offset}$* value for transmissions with spatial domain filters corresponding to TCI states associated with *physCellId* different from *physCellId* for the serving cell in addition to a first $N_{TA,offset}$ value for transmissions with spatial domain filters corresponding to TCI states associated with *physCellId* for the serving cell. The *first and second $N_{TA,offset}$* values correspond to first and second TAGs [11, TS 38.321] having an association indicated by *tag-Id-ptr* with first and second joint TCI states provided by *dl-OrJointTCI-StateList* or first and second UL TCI states provided by *ul-TCI-State-List.* If the UE is not provided *n-TimingAdvanceOffset* for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG. For a band with synchronous contiguous intra-band EN-DC in a band combination with non-applicable maximum transmit timing difference requirements as described in Note 1 of Table 7.5.3-1 of [10, TS 38.133], if the UE indicates *ul-TimingAlignmentEUTRA-NR* as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell

in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^{\mu} \cdot 15$ kHz, the timing advance command for a TAG indicates the change of the uplink timing relative to the current uplink timing for the TAG in multiples of $16 \cdot 64 \cdot T_c/2^{\mu}$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A = 0, 1, 2, ..., 3846$, where an amount of the time alignment for the TAG with SCS of $2^{\mu} \cdot 15$ kHz is $N_{TA} = T_A \cdot 16 \cdot 64/2^{\mu}$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A = 0, 1, 2,..., 63$, where for a SCS of $2^{\mu} \cdot 15$ kHz, $N_{TA\_new} = N_{TA\_old} + (T_A - 31) \cdot 16 \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

(continued)

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot $n + k + 1 + 2^\mu \cdot K_{\text{offset}}$ where

$$k = \left\lceil N_{\text{slot}}^{\text{subframe},\mu} \cdot \left(N_{\text{T,1}} + N_{\text{T,2}} + N_{\text{TA,max}} + 0.5\right)/T_{\text{sf}} \right\rceil,$$

$N_{\text{T,1}}$ is a time duration in msec of $N_1$ symbols corresponding to a PDSCH processing time for UE processing capability 1 when additional PDSCH DM-RS is configured, $N_{\text{T,2}}$ is a time duration in msec of $N_2$ symbols corresponding to a PUSCH preparation time for UE processing capability 1 [6, TS 38.214], $N_{\text{TA,max}}$ is the maximum timing advance value in msec that can be provided by a TA command field of 12 bits, $N_{\text{slot}}^{\text{subframe},\mu}$ is the number of slots per subframe, $T_{\text{sf}}$ is the subframe duration of 1 msec, and $K_{\text{offset}} = K_{\text{cell,offset}} - K_{\text{UE,offset}}$, where $K_{\text{cell,offset}}$ is provided by

cellSpecificKoffset and $K_{\text{UE,offset}}$ is provided by a Differential Koffset MAC CE command [11, TS 38.321]; otherwise, if not respectively provided, $K_{\text{cell,offset}} = 0$ or $K_{\text{UE,offset}} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{\text{slot}}^{\text{subframe},\mu}$ are determined with respect to the minimum SCS among the SCSs of all configured UL BWPs for all uplink carriers in the TAG. $N_{\text{TA,max}}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA}$ = 0, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{\text{TA}}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{\text{TA}}$ at cell reselection; else, if the UE is not provided SRS-autonomousTAupdate, the UE maintains the $N_{\text{TA}}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{\text{TA}}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid

overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted (see Table 5). The timing advance command MAC CE is described below with reference to FIG. 2.

**EP 4 712 598 A1**

FIG. 2 illustrates timing advance command MAC CE according to an embodiment of the present disclosure.
Referring to FIG. 2, timing advance command MAC CE may include a TAG ID and a timing advance command. Table 6 below shows payload of the timing advance command MAC CE.

[Table 6]

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;

- Timing Advance Command: This field indicates the index value $T_A$ (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;

- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;

- R: Reserved bit, set to 0.

<Timing Advance Group (TAG)>

A timing advance group (TAG) refers to a group of serving cells that use the same timing advance value. Table 7 below shows definition of the TAG and configuration information related to the TAG.

11

【Table 7】

| |
|---|
| **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.<br><br>*TAG-Config*<br><br>The IE *TAG-Config* is used to configure parameters for a time-alignment group.<br><br><div align="center">***TAG-Config* information element**</div><br><br>-- ASN1START<br>-- TAG-TAG-CONFIG-START<br><br>TAG-Config ::=            SEQUENCE {<br>      tag-ToReleaseList                  SEQUENCE (SIZE (1..maxNrofTAGs)) OF TAG-Id<br>OPTIONAL,     -- Need N<br>      tag-ToAddModList                  SEQUENCE (SIZE (1..maxNrofTAGs)) OF TAG<br>OPTIONAL      -- Need N<br>}<br><br><br>TAG ::=            SEQUENCE {<br>      tag-Id                  TAG-Id,<br>      timeAlignmentTimer            TimeAlignmentTimer,<br>      ...<br>}<br><br><br>TAG-Id ::=                  INTEGER (0..maxNrofTAGs-1) |

| |
|---|
| ***tag-Id***<br>Indicates the TAG of the SpCell or an SCell, see TS 38.321 [3]. Uniquely identifies the TAG within the scope of a Cell Group (i.e. MCG or SCG). |
| ***timeAlignmentTimer***<br>The timeAlignmentTimer for TAG with ID tag-Id, as specified in TS 38.321 [3]. |
| **maxNrofTAGs**       INTEGER ::= 4 -- Maximum number of Timing Advance Groups |

| |
|---|
| –       ***CellGroupConfig***<br>The *CellGroupConfig* IE is used to configure a master cell group (MCG) or secondary cell group (SCG). A cell |

group comprises of one MAC entity, a set of logical channels with associated RLC entities and of a primary cell (SpCell) and one or more secondary cells (SCells).

**CellGroupConfig information element**

-- ASN1START

-- TAG-CELLGROUPCONFIG-START

-- Configuration of one Cell-Group:

CellGroupConfig ::=                     SEQUENCE {

cellGroupId                     CellGroupId,

    rlc-BearerToAddModList                     SEQUENCE (SIZE(1..maxLC-ID)) OF RLC-BearerConfig              OPTIONAL,     -- Need N

    rlc-BearerToReleaseList                     SEQUENCE (SIZE(1..maxLC-ID)) OF LogicalChannelIdentity              OPTIONAL,     -- Need N

    mac-CellGroupConfig                                         MAC-CellGroupConfig OPTIONAL,     -- Need M

    physicalCellGroupConfig                                         PhysicalCellGroupConfig OPTIONAL,     -- Need M

    spCellConfig                                         SpCellConfig OPTIONAL,     -- Need M

    sCellToAddModList                     SEQUENCE (SIZE (1..maxNrofSCells)) OF SCellConfig              OPTIONAL,     -- Need N

    sCellToReleaseList                     SEQUENCE (SIZE (1..maxNrofSCells)) OF SCellIndex              OPTIONAL,     -- Need N

(...)

**MAC-CellGroupConfig**

The IE MAC-CellGroupConfig is used to configure MAC parameters for a cell group, including DRX.

**MAC-CellGroupConfig information element**

-- ASN1START

-- TAG-MAC-CELLGROUPCONFIG-START

MAC-CellGroupConfig ::=              SEQUENCE {

    drx-Config                                         SetupRelease { DRX-Config } OPTIONAL,     -- Need M

    schedulingRequestConfig                                         SchedulingRequestConfig OPTIONAL,     -- Need M

    bsr-Config                                         BSR-Config OPTIONAL,     -- Need M

    tag-Config                                         TAG-Config OPTIONAL,     -- Need M

    phr-Config                                         SetupRelease { PHR-Config } OPTIONAL,     -- Need M

    skipUplinkTxDynamic              BOOLEAN,

(...)

**CellGroupId**

The IE CellGroupId is used to identify a cell group. Value 0 identifies the master cell group. Other values identify secondary cell groups. In this version of the specification only values 0 and 1 are supported.

***CellGroupId information element***

**-- ASN1START**

---

-- TAG-CELLGROUPID-START

CellGroupId ::= INTEGER (0.. maxSecondaryCellGroups)

-- TAG-CELLGROUPID-STOP

-- ASN1STOP

maxSecondaryCellGroups INTEGER ::= 3

< Procedure >

Uplink time alignment may be performed based on Table 8 below.

[Table **8**]

5.2 Maintenance of Uplink Time Alignment

RRC configures the following parameters for the maintenance of UL time alignment:

    - *timeAlignmentTimer* (per TAG) which controls how long the MAC entity considers the Serving Cells belonging to the associated TAG to be uplink time aligned;

    - *inactivePosSRS-TimeAlignmentTimer* which controls how long the MAC entity considers the Positioning SRS transmission in RRC_INACTIVE in clause 5.26 to be uplink time aligned;

    - *cg-SDT-TimeAlignmentTimer* which controls how long the MAC entity considers the uplink transmission for CG-SDT to be uplink time aligned.

The MAC entity shall:

    1> when a Timing Advance Command MAC CE is received, and if an $N_{TA}$ (as defined in TS 38.211 [8]) has been maintained with the indicated TAG:

        2> apply the Timing Advance Command for the indicated TAG;

        2> if there is ongoing Positioning SRS Transmission in RRC_INACTIVE as in clause 5.26:

            3> start or restart the *inactivePosSRS-TimeAlignmentTimer* associated with the indicated TAG.

        2> if CG-SDT procedure triggered as in clause 5.27 is ongoing:

            3> start or restart the *cg-SDT-TimeAlignmentTimer* associated with the indicated TAG.

        2> else:

            3> start or restart the *timeAlignmentTimer* associated with the indicated TAG.

    1> when a Timing Advance Command is received in a Random Access Response message for a Serving Cell belonging to a TAG or in a MSGB for an SpCell:

        2> if the Random Access Preamble was not selected by the MAC entity among the contention-based Random Access Preamble:

            3> apply the Timing Advance Command for this TAG;

            3> start or restart the *timeAlignmentTimer* associated with this TAG.

        2> else if the *timeAlignmentTimer* associated with this TAG is not running:

            3> apply the Timing Advance Command for this TAG;

            3> start the *timeAlignmentTimer* associated with this TAG;

(continued)

<table>
<tr><td>3> when the Contention Resolution is considered not successful as described in clause 5.1.5; or<br>3> when the Contention Resolution is considered successful for SI request as described in clause 5.1.5, after transmitting HARQ feedback for MAC PDU including UE Contention Resolution</td><td></td></tr>
<tr><td></td><td>Identity MAC CE:<br>4> stop *timeAlignmentTimer* associated with this TAG.</td></tr>
<tr><td>3> when the Contention Resolution is considered not successful as described in clause 5.1.5:</td><td></td></tr>
<tr><td></td><td>4> if CG-SDT procedure triggered as in clause 5.27 is ongoing:<br>    5> set the $N_{TA}$ value to the value before applying the received Timing Advance Command as in TS 38.211 [8].</td></tr>
<tr><td>3> when the Contention Resolution is considered successful for Random Access procedure while the CG-SDT procedure is ongoing:</td><td></td></tr>
<tr><td></td><td>4> stop *timeAlignmentTimer* associated with this TAG;<br>4> start or restart the *cg-SDT-TimeAlignmentTimer* associated with this TAG.</td></tr>
<tr><td colspan="2"></td></tr>
<tr><td>3> when the Contention Resolution is considered successful for Random Access procedure while SRS transmission in RRC_INACTIVE is ongoing:</td><td></td></tr>
<tr><td></td><td>4> start or restart the *inactivePosSRS-TimeAlignmentTimer* associated with this TAG.</td></tr>
<tr><td colspan="2">  2> else:<br>    3> ignore the received Timing Advance Command.<br>1> when an Absolute Timing Advance Command is received in response to a MSGA transmission including C-RNTI MAC CE as specified in clause 5.1.4a:<br>  2> apply the Timing Advance Command for PTAG;<br>  2> if there is ongoing Positioning SRS Transmission in RRC_INACTIVE as in clause 5.26:<br>    3> start or restart the *inactivePosSRS-TimeAlignmentTimer* associated with the indicated TAG.<br>  2> if CG-SDT procedure is ongoing:<br>    3> start or restart the *cg-SDT-TimeAlignmentTimer* associated with PTAG.<br>  2> else:<br>    3> start or restart the *timeAlignmentTimer* associated with PTAG.<br>1> when the indication is received from upper layer for stopping the *inactivePosSRS-TimeAlignmentTimer:*<br>  2> stop the *inactivePosSRS-TimeAlignmentTimer.*<br>1> when the indication is received from upper layer for starting the *inactivePosSRS-TimeAlignmentTimer:*<br>  2> start or restart the *inactivePosSRS-TimeAlignmentTimer.*<br>1> when instruction from the upper layer has been received for starting the *cg-SDT-TimeAlignmentTimer:*<br>  2> start the *cg-SDT-TimeAlignmentTimer.*<br>1> when instruction from the upper layer has been received for stopping the *cg-SDT-TimeAlignmentTimer:*<br>  2> consider the *cg-SDT-TimeAlignmentTimer* as expired.<br>1> when instruction from the upper layer has been received for starting the *TimeAlignmentTimer* associated with PTAG:<br>  2> start the *TimeAlignmentTimer* associated with PTAG.<br>1> when *a timeAlignmentTimer* expires:<br>  2> if the *timeAlignmentTimer* is associated with the PTAG:<br>    3> flush all HARQ buffers for all Serving Cells;<br>    3> notify RRC to release PUCCH for all Serving Cells, if configured;</td></tr>
</table>

3> notify RRC to release SRS for all Serving Cells, if configured;

3> clear any configured downlink assignments and configured uplink grants;

3> clear any PUSCH resource for semi-persistent CSI reporting;

3> consider all running *timeAlignmentTimers* as expired;

3> maintain N$_{TA}$ (defined in TS 38.211 [8]) of all TAGs.

2> else if the *timeAlignmentTimer* is associated with an STAG, then for all Serving Cells belonging to this TAG:

3> flush all HARQ buffers;

3> notify RRC to release PUCCH, if configured;

3> notify RRC to release SRS, if configured;

3> clear any configured downlink assignments and configured uplink grants;

---

3> clear any PUSCH resource for semi-persistent CSI reporting;

3> maintain N$_{TA}$ (defined in TS 38.211 [8]) of this TAG.

1> when the *inactivePosSRS-TimeAlignmentTimer* expires:

2> notify RRC to release Positioning SRS for RRC_INACTIVE configuration(s).

1> when the *cg-SDT-TimeAlignmentTimer* expires:

2> clear any configured uplink grants;

2> if a PDCCH addressed to the MAC entity's C-RNTI after initial transmission for the CG-SDT with CCCH message has not been received:

3> consider ongoing CG-SDT procedure as terminated;

3> indicate the expiry of *cg-SDT-TimeAlignmentTimer* to the upper layer.

2> flush all HARQ buffers;

2> maintain N$_{TA}$ (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the *timeAlignmentTimer* associated with the SCell as expired.

The MAC entity shall not perform any uplink transmission on a Serving Cell except the Random Access Preamble and MSGA transmission when the *timeAlignmentTimer* associated with the TAG to which this Serving Cell belongs is not running, CG-SDT procedure is not ongoing or SRS transmission in RRC_INACTIVE as in clause 5.26 is not on-going.

Furthermore, when the *timeAlignmentTimer* associated with the PTAG is not running, CG-SDT procedure is not ongoing and SRS transmission in RRC_INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the *cg-SDT- TimeAlignmentTimer* is not running during the ongoing CG-SDT procedure as triggered in clause 5.27. The MAC entity shall not perform any uplink transmission except the Random Access Preamble and MSGA transmission when *inactivePosSRS-TimeAlignmentTimer* is not running during the procedure for SRS transmission in RRC_INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of configuring multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 9 below, the configuration of TA values for multi-DCI (M-DCI) based M-TRP operation is considered.

[Table 9]

| |
|---|
| 5. Study, and if justified, specify the following<br>　　- Two TAs for UL multi-DCI for multi-TRP operation<br>　　- Power control for UL single DCI for multi-TRP operation where unified TCI framework extension in objective 2 is assumed.<br>　　For the case of simultaneous UL transmission from multiple panels, the operation will only be limited to the objective 6 scenarios. |

Here, the TA (TA value) may be based on the description of FIG. 2 and the contents described in the timing advance (TA) related procedure described above.

In RANI and RAN2 standards prior to Rel-18, the base station manages UE TA values through values called $N_{TA}$ and $N_{TA,offset}$. The base station may set $N_{TA}$ as follows. The base station may i) set $N_{TA}$ via RAR MAC CE or ii) set $N_{TA}$ via timing advance command MAC CE (TA command MAC CE). In addition, the base station may utilize the concept of the timing advance group (TAG) to configure up to 4 TAGs per UE for a specific cell or cell combination and perform update/management of an $N_{TA}$ value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, an agreement is reached for two TAs, as shown in Table 10 below.

[Table 10]

| |
|---|
| **Agreement**<br>Enhancements on two TAs for UL multi-DCI for multi-TRP operation are applicable to both FR1 and FR2.<br>**Agreement**<br>For multi-DCI based multi-TRP operation with two TAs, support configuring two TAGs belonging to a serving cell.<br>**Agreement**<br>For multi-DCI multi-TRP operation with two TAs, up to two n-TimingAdvanceOffset value per serving cell is supported<br>**Agreement**<br>For multi-DCI multi-TRP operation with two TAs in a CC, two DL reference timings are supported where each DL reference timing is associated with one TAG<br>　　• baseline assumption is that the Rx timing difference between the two DL reference timings is no larger than CP length<br>　　• as an optional UE capability, Rx timing difference between the two DL reference timings can be assumed to be larger than CP length<br>　　　　　　　　　　　　　　　　• FFS: the maximum Rx timing difference (could be up to RAN4) |

(continued)

| | |
|---|---|
| | • Other than UE capability details and relevant configuration, no additional RAN1 specification enhancement specific for this case is expected |

**Agreement**

Multi-DCI multi-TRP operation with two TAs is supported for Rel-15/16/17 TCI frameworks and unified TCI framework extension discussed in 9.1.1.1 as well as UL beam indication via spatial relation.

**Agreement**

For associating TAGs to target UL channels/signals for multi-DCI based multi-TRP operation, support the following:
Associate TAG to TCI-state
    • Associate TAG ID with UL/joint TCI state
    • For UL transmission, the TAG ID associated with the UL/joint TCI state is utilized
    • A baseline is UE expects that the [activated] UL/joint TCI states [of UL signals/channels] associated to one CORESET Pool Index correspond to one TAG
    • Working Assumption: A UE may report that it supports that the [activated] UL/joint TCI states [of UL signals/channels] associated to one CORESETPoolIndex correspond to both TAGs
FFS: on how to handle association when Rel-15/16 spatial relation framework is used for
    • PUCCH
    • DG/CG Type 1/Type 2 PUSCH
    • AP/SP/P SRS

As described above, it was discussed that two TAGs can be configured to manage two TA values in one serving cell. With regard to a reference timing to which the TA value managed in each TAG is applied, it was agreed to support two DL reference timings in one serving cell.

Additionally, it was agreed that the PDCCH ordered CFRA mechanism would be utilized for the two TA acquisitions. Discussions were held about uplink resources and a connection relationship between the two TAs as to which uplink transmissions the two acquired TAs (TAGs) should be utilized for. As a result, it was agreed to associate the TAG ID with the UL and/or joint TCI state for the association between the two TAGs configured within the serving cell and the UL channel/RS, as in the agreement in Table 10.

The remaining issues are as follows. For the UE utilizing the Rel-15/16 spatial relation framework that does not support the TCI state, there is a problem of how to associate the uplink resources with the TAG. In the current standardization meeting, a method of associating TAG IDs with spatialRelationInfo is mainly discussed, similar to associating the TAG with the TCI state. However, even if the TAG IDs are associated with spatialRelationInfo, the configuration/activation method of spatialRelation differs for each PUSCH/PUCCH/SRS, and when the UL default beam is utilized (e.g., when scheduled based on DCI format 0_0), there may be ambiguity as to which TAG to utilize.

The present disclosure proposes an uplink transmission method for a UE when a base station supports multiple TAs for a specific CC/BWP(s) of the UE based on this background.

In the present disclosure, "/" may be interpreted as "and," "or," or "and/or" depending on the context.

Problem 1: In the spatial relation framework of Rel-15/16, spatialRelationInfo is not directly configured/indicated for PUSCH. Specifically, a transmit (Tx) beam of the SRS resource indicated to SRI in UL grant DCI is utilized as a Tx beam for PUSCH transmission. In this case, there may be ambiguity as to which of multiple TAG IDs is utilized for the PUSCH transmission. Proposal 1 below specifically describes a solution to the problem 1.

<Proposal 1>

A TAG (TAG ID) related to a PUSCH may be determined based on at least one of the following ① to ③.

① The TAG ID related to the PUSCH may be determined based on SRS resource(s). The SRS resource(s) may be SRS resource(s) indicated based on UL grant DCI. Specifically, the SRS resource(s) are indicated based on an SRS Resource Indicator (SRI) of the UL grant DCI. A UE may transmit the PUSCH based on the TAG ID associated with spatialRelationInfo configured/activated to the indicated SRS resource(s). For example, the UE may perform the PUSCH transmission by utilizing a TA value related to the TAG ID utilized/applied when the indicated SRS resource(s) was previously transmitted.

② A base station may indicate the TAG ID related to the PUSCH to the UE based on a codepoint of an SRI field in the UL grant DCI. Specifically, the TAG ID (along with a power control parameter set) may be jointly encoded to each codepoint of the SRI field.

According to the existing method, the following operation/configuration is applied for PUSCH scheduling based on the UL grant DCI. The power control parameter set (including closed/open-loop power control parameters) for PUSCH transmission is jointly encoded to each codepoint of the SRI field of the DCI. In the same manner, the TAG ID to be utilized for the PUSCH transmission may be jointly encoded to each codepoint of the SRI field of the UL grant DCI. If a specific codepoint is indicated based on the SRI field, the UE may perform the PUSCH transmission by utilizing the TA value related to the TAG ID jointly encoded to the corresponding codepoint.

③ The TAG ID related to the PUSCH may be determined based on the SRS resource(s). The SRS resource(s) may be SRS resource(s) configured based on ConfiguredGrantConfig. Specifically, the SRS resource(s) are configured (for type 1 CG PUSCH) based on ConfiguredGrantConfig (in a semi-static method). The UE may transmit the PUSCH based on the TAG ID associated with spatialRelationInfo configured/activated to the SRS resource(s). For example, the UE may perform the PUSCH transmission (e.g., type 1 configured grant PUSCH transmission) by utilizing a TA value related to the TAG ID utilized when the SRS resource(s) configured to the ConfiguredGrantConfig was previously transmitted. The present embodiment may be utilized for the type 1 configured grant PUSCH transmission, but is not limited thereto. That is, the present embodiment may also be applied to the PUSCH scheduled based on DCI.

The proposal 1 may be applied to i) a dynamic grant PUSCH (DG PUSCH) and ii) a CG PUSCH (e.g., Type 2 configured grant PUSCH scheduled/activated based on DCI).

Problem 2: It may be assumed that a PUSCH is scheduled based on DCI format 0_0 and a PUSCH is scheduled based on DCI format 0_1/0_2, and that there is only one SRS resource in an SRS resource set. In this instance, a usage configured to the SRS resource set may be a codebook (CB) or a non-codebook (NCB). In this case, there may be ambiguity as to which of multiple TAG IDs is utilized for the PUSCH. The following describes a case, in which this problem occurs, in more detail.

For example, for the PUSCH scheduled based on DCI format 0_0, there is no SRI field in the DCI. The UE determines a Tx beam (spatial domain transmission filter) of the PUSCH based on a PUCCH resource with a lowest ID. Specifically, the PUCCH resource may be a PUCCH resource with the lowest ID among PUCCH resources to which PUCCH- spatialRelationInfo is connected. A spatial relation/spatial setting for PUSCH transmission may be based on a reference RS based on spatialRelationInfo of the PUCCH resource. In the same manner, the PUSCH may be scheduled based on DCI format 0_1/0_2. In this case, if there is only one SRS resource in a CB/NCB SRS resource set, an SRI field is not present in the DCI.

The following proposals 2-1 and 2-2 specifically describe a solution to the above-described problem 2.

<Proposal 2-1>

For the PUSCH scheduled based on DCI format 0_0, a TAG ID related to the PUSCH may be determined based on at least one of the following embodiments.

① The TAG ID related to the PUSCH may be determined similarly to a method of determining a Tx beam of the PUSCH scheduled based on DCI format 0_0. Specifically, the UE may transmit the PUSCH based on a TAG ID associated with (activated) spatialRelationInfo of the PUCCH with the lowest ID among PUCCH resources to which PUCCH-spatialRelationInfo is connected/activated. The UE may perform the PUSCH transmission by utilizing a TA value based on the TAG ID associated with spatialRelationInfo of the PUCCH.

② The TAG ID related to the PUSCH may be semi-statically configured/determined. Specifically, the base station may configure/indicate a TAG ID, that is applied when transmitting the PUSCH scheduled based on DCI format 0_0, to the UE via an RRC parameter. The RRC parameter may be an existing defined parameter or a newly defined parameter. The UE may perform the PUSCH transmission by utilizing the TA value based on the TAG ID configured based on the RRC parameter.

③ The TAG ID may be determined based on the embodiment ③ of the proposal 1. That is, the UE may transmit the PUSCH based on the TAG ID associated with spatialRelationInfo configured/activated to SRS resource(s) configured based on ConfiguredGrantConfig.

<Proposal 2-2>

If a PUSCH is scheduled based on DCI format 0_1/0_2 and there is only one SRS resource in a CB/NCB SRS resource set, a TAG ID related to the PUSCH may be determined based on at least one of the following embodiments.

① The TAG ID related to the PUSCH may be determined similarly to a method of determining a PUSCH Tx beam when there is only one SRS resource in the CB/NCB SRS resource set. Specifically, the UE may transmit the PUSCH based on the TAG ID associated with spatialRelationInfo configured/activated to the SRS resource in the CB/NCB SRS resource set. The UE may perform the PUSCH transmission by utilizing the TA value related to the TAG ID utilized when the configured SRS resource was previously transmitted.

Or/and, the TAG ID related to the PUSCH may be determined based on the embodiment ② or/and the embodiment ③ of the proposal 2-1.

The following operation/configuration for the PUCCH and the SRS may be considered based on the additional embodiments of the proposal 1 and the proposals 2-1/2-2.

For the PUCCH, the PUCCH transmission may be performed based on the TAG ID associated with the PUCCH-spatialRelationInfo configured/activated for each PUCCH resource. In this instance, if different PUCCH resources are present in a specific PUCCH resource group, the UE may not expect that the different PUCCH resources will be related to different TAG IDs. Alternatively, when the base station configures different PUCCH resources in a PUCCH resource group, a restriction may be applied so that the PUCCH resources are related to the same TAG ID (a restriction so that the PUCCH resources are not related to different TAG IDs). The present embodiment takes into consideration the following technical matters.

The existing PUCCH resource group is used as a container for simultaneously updating all PUCCH resources in the corresponding group with specific spatialRelationInfo. This may mean that the PUCCH resources in the PUCCH group are related to a specific TRP/panel. Therefore, the additional embodiment described above is intended to prevent the mixing of different (TRP-related) TAG IDs in the PUCCH resource group.

For the SRS, the SRS transmission may be performed by utilizing the TAG ID associated with spatialRelationInfo configured/activated for each SRS resource. In this instance, the UE may not expect that different SRS resources in a specific SRS resource set will be related to different TAG IDs. Alternatively, when the base station configures SRS resources in an SRS resource set, a restriction may be applied so that the SRS resources are related to the same TAG ID (a restriction so that the SRS resources are not related to different TAG IDs). The present embodiment takes into consideration the following technical matters.

Since SRS resources in a specific SRS resource set are related to a single power control parameter set, the SRS resources in the SRS resource set may be related to a specific TRP/panel. Therefore, the additional embodiment described above is to prevent the SRS resources in the SRS resource set from being related to different TRPs/TAGs.

In addition, if two SRS resource sets for CB/NCB usage are configured for M-TRP UL transmission, each SRS resource set may be related/associated with a different TAG ID.

As an extension of the proposal 1 and the proposal 2, the following method may be considered. For the M-TRP UL transmission, two SRI fields may be configured/present in UL grant DCI (e.g., SRS resource indicator, second SRS resource indicator). In this case, if the PUSCH transmissions related to different SRS resource sets are scheduled, the TAG ID associated with the spatialRelationInfo configured/activated for the indicated SRS resource(s) based on each SRI field may be utilized when transmitting the PUSCH related to each indicated SRS resource.

Additional embodiments of the proposal 1 and the proposals 2-1/2-2 may also be applied to a UE supporting standardized unified TCI after Rel-17.

Problem 3: As Tx beam update methods evolve in the Rel-15/16 standards, spatialRelation may be updated based on RRC or MAC CE for both PUCCH and SRS. The TAG ID related to the spatialRelation may also be updated, but there is a problem in which an application time of the updated TAG ID is ambiguous. This is described in detail below.

For example, spatialRelation for a specific UL resource may be updated from spatialRelation 1 to spatialRelation 2. If the update is an RRC based update, the spatialRelation may be updated based on RRC reconfiguration. If the update is a MAC CE based update, the spatialRelation update may be applied in a slot n+3 when a (positive) A/N PUCCH transmission slot is n after receiving the MAC CE. As the spatialRelation is updated from spatialRelation 1 to spatialRelation 2, the associated TAG ID may be updated from TAG ID 1 to TAG ID 2. Unlike the updated spatialRelation, there is ambiguity as to when a TA value related to the updated TAG should be applied. A solution to the problem 3 is specifically described in proposal 3 below.

<Proposal 3>

① The existing beam application timing may be extended and applied to the TAG ID update. For example, spatialRelationInfo may be updated for a specific UL resource based on RRC signaling. In this case, the updated TAG ID may be applied to the RRC reconfiguration timing. For example, spatialRelationInfo may be updated based on MAC CE. The updated TAG ID may be applied at a MAC CE application time (after 3 slots after (positive) A/N PUCCH). If the UE supports unified TCI, beamAppTime (BAT) parameter, which is related to time (slot) for applying the indicated TCI after receiving beam indication DCI, may be utilized. Specifically, the updated TAG ID may be applied at time (slot) after Y symbol indicated by the beamAppTime (BAT) parameter from a last symbol of acknowledgement for the beam indication DCI.

② The operation (see Table 11 below) related to time at which the indicated TA value should be applied upon receiving a TA command may also be extended and applied to the TAG ID update. Specifically, the updated TAG ID may be applied at the time (slot) at which uplink timing adjustment based on the TA command is applied.

[Table 11]

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, **the corresponding adjustment of the uplink transmission timing applies from the beginning of uplink slot n + $k$ + 1+$2^{\mu}$ · $K_{offset}$ where** $k = \left\lceil N_{\text{slot}}^{\text{subframe},\mu} \cdot \left(N_{T,1} + N_{T,2} + N_{TA,\max} + 0.5\right)/T_{\text{sf}} \right\rceil$, **$N_{T,1}$ is a time duration in msec of $N_1$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,\max}$ is the maximum timing advance value in msec that can be provided by a TA command field of 12 bits, $N_{\text{slot}}^{\text{subframe},\mu}$ is the number of slots per subframe, $T_{\text{sf}}$ is the subframe duration of 1 msec, and $K_{\text{offset}}$ = $K_{\text{cell,offset}}$ - $K_{\text{UE,offset}}$, where $K_{\text{cell,offset}}$ is provided by** *CellSpecific_Koffset* **and $K_{\text{UE,offset}}$ is provided by a Differential Koffset MAC CE command [11, TS 38.321]; otherwise, if not respectively provided, $K_{\text{cell,offset}}$ = 0 or KUE,offset = 0.** $N_1$ and $N_2$ are determined with respect to the minimum SCS among the SCSs of all configured UL BWPs for all uplink carriers in the TAG and of all configured DL BWPs for the corresponding downlink carriers. For $\mu$ = 0, the UE assumes $N_{1,0}$ = 14 [6, TS 38.214]. Slot n and $N_{\text{slot}}^{\text{subframe},\mu}$ are determined with respect to the minimum SCS among the SCSs of all configured UL BWPs for all uplink carriers in the TAG. $N_{TA,\max}$ is determined with respect to the minimum SCS among the SCSs of all configured UL BWPs for all uplink carriers in the TAG and for all configured initial UL BWPs provided by *initialUplinkBWP*. The uplink slot $n$ is the last slot among uplink slot(s) overlapping with the slot(s) of PDSCH reception assuming $T_{TA}$ = 0, where the PDSCH provides the timing advance command and $T_{TA}$ is defined in [4, TS 38.211].

22

Additionally, in the operation of the ②, an application time of beam update for a specific UL resource may be redefined based on the application time of the TAG ID update. Through this, the TAG ID update and the beam update may be simultaneously performed. For example, if the beam update application time is earlier than the TAG ID update time, the beam update time may be delayed to match the TAG ID update time. This operation may be performed if the beam update application time is earlier than the time required for the existing TAG ID update. This operation allows beams/TAs to be updated simultaneously (as much as possible), which can resolve the problem of misalignment between Tx beams and TA values.

The proposal 3 may also be applied to a UE supporting standardized unified TCI after Rel-17, even if the TAG ID is associated with the TCI state. That is, if the TCI state is updated by DCI/MAC CE/RRC and the TAG ID is updated together, the UE may follow the operation of the proposal 3.

Problem 4: In the current standardization discussion, there is an ongoing discussion to use RRC signaling to link the TAG ID to the UL or joint TCI state. In this instance, up to 8 TCI states are activated for a TCI state field of DL grant/non-grant DCI per CORESET pool based on MAC CE. This may lead to mismatch in the rule (Table 10: 'one CORESET Pool Index correspond to one TAG') in which the same TAG IDs (for the same TRP) shall be linked per CORESET pool.

For example, it may be assumed that a TAG ID has been already linked to each TCI state based on RRC signaling. In this case, when up to 8 TCI states are activated in the TCI state field for a specific CORESET pool, a constraint may arise that only TCI states to which the same TAG ID is configured/linked shall be utilized. Proposal 4 below specifically describes a solution to the problem 4.

<Proposal 4>

① Restrictions may apply to the base station operation. When the base station activates up to 8 UL or joint TCI states in a TCI state field of DL grant/non-grant DCI for a specific CORESET pool within a CC/BWP, the base station may need to utilize only TCI states to which the same TAG IDs are configured/linked.

② When the base station activates up to 8 UL or joint TCI states in a TCI state field of DL grant/non-grant DCI for a specific CORESET pool within a CC/BWP, it may be allowed that TAG IDs configured/linked to the 8 TCI states are different from each other. In this case, it may be defined/regulated/agreed between the base station and the UE so that the 8 TCI states are linked to one specific TAG ID among two different TAG IDs. For example, the specific TAG ID may be based on at least one of the following 1) to 5).

  1) The largest number of TAG IDs among the TAG IDs linked/configured to the up to 8 TCI states
  2) A TAG ID linked to the lowest TCI state among the TAG IDs linked/configured to the up to 8 TCI states
  3) A TAG ID linked to the TCI state activated at the lowest codepoint among the TAG IDs linked/configured to the up to 8 TCI states
  4) A lowest TAG ID among the TAG IDs linked/configured to the up to 8 TCI states
  5) A TAG ID related to a CORESET pool index at which the DCI is received
  When the base station activates the up to 8 TCI states based on MAC CE through the above operation, the TAG ID linked/configured to each TCI state may be updated by the MAC CE.

③ When the base station activates up to 8 UL or joint TCI states in a TCI state field of DL grant/non-grant DCI for a specific CORESET pool within a CC/BWP, it may be allowed that TAG IDs configured/linked to the 8 TCI states are different from each other. Since there may already be an (explicit/implicit) relation between a specific CORESET pool and a TAG ID, the linked/related TAG ID is linked/applied to the activated TCI states.

Additionally, in Rel-16/17/18 multi-beam enhancement, a simultaneous multi-CC TCI state update operation is defined to update (simultaneously/at once) multiple (pre-configured) CCs to specific TCI state ID(s). Operations of the following i) and ii) may be performed based on a (pre-configured) target CC list by the base station.

  i) Simultaneous update for a CC list to TCI state(s) within a TCI state pool may be performed using the TCI state pool configured to a reference CC.
  ii) Simultaneous update may be performed for each CC (for TCI state(s) within the CC with the same TCI state ID(s)) by utilizing the TCI state pool configured to each CC in the CC list.

When the above-described operation is performed together with an operation of linking the TCI state and the TAG ID in two TAs, the following embodiment may be applied.
(In particular, in the above operation i)) the UE expects that all CCs in the CC list configured for the simultaneous multi-CC TCI state update are related/associated with the same TAG ID(s). Or/and, the UE does not expect that all CCs in the CC list configured for the simultaneous multi-CC TCI state update are related/associated with different TAG ID(s). Or/and, the above-described configuration may be enforced by the base station. The present embodiment takes into account the following technical matters.

Since the TAG ID related to the TCI state is updated together when the TCI state is updated, the above-described embodiment may be applied to prevent a TAG ID that is not (previously) related to the corresponding CC in CCs of the CC list from being indicated/updated by the TCI state update. That is, since a specific TAG is previously managed for a specific target group of CC(s), the above-described embodiment may be applied to maintain this relation.

The above-described embodiment can be applied (for the target CC list) even if spatialRelationInfo is updated (simultaneously/at once) across multiple CCs.

The embodiments and the additional embodiments of the proposals 1/2/3/4 can operate based on specific combinations.

An example of the UE (base station) operation based on at least one of the above-described embodiments (e.g., at least one of the proposals 1 to 4) is as follows.

1) A UE (a base station) receives (transmits) a configuration related to two TAGs (two TAs) within a specific serving cell. The configuration may include a relation between TAG IDs and UL resources. Before/after the configuration, two TA acquisitions (using PDCCH ordered CFRA) may be performed for each TAG.

2) The UE (the base station) receives (transmits) a message scheduling uplink transmission related to the two TAGs. The message may be signaled via RRC/MAC/DCI. For example, the message may be DCI.

3) The UE (the base station) transmits (receives) an uplink signal based on the message.

The transmission and reception of the uplink signal may be performed based on at least one of the proposals 1 to 4.

The UE/base station operation is merely an example, and each operation (or step) is not necessarily essential. The operation related to uplink transmission related to different TAs of the UE according to the above-described embodiments may be omitted or added depending on the UE/base station implementation method.

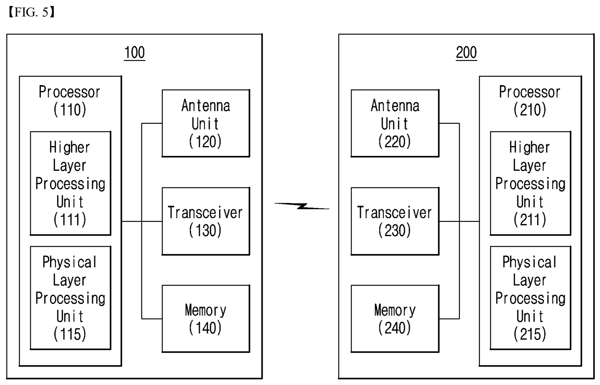

From an implementation perspective, operations of the UE/BS according to the above-described embodiments (e.g., operations based on at least one of the proposals 1 to 4) can be processed by a device (e.g., processors 110 and 210 of FIG. 5) of FIG. 6 to be described below.

Further, the operations of the UE/BS according to the above-described embodiments (e.g., operations based on at least one of the proposals 1 to 4) can be stored in a memory (e.g., memories 140 and 240 of FIG. 5) in the form of commands/programs (e.g., instructions, executable codes) for running at least one processor (e.g., processors 110 and 210 of FIG. 5).

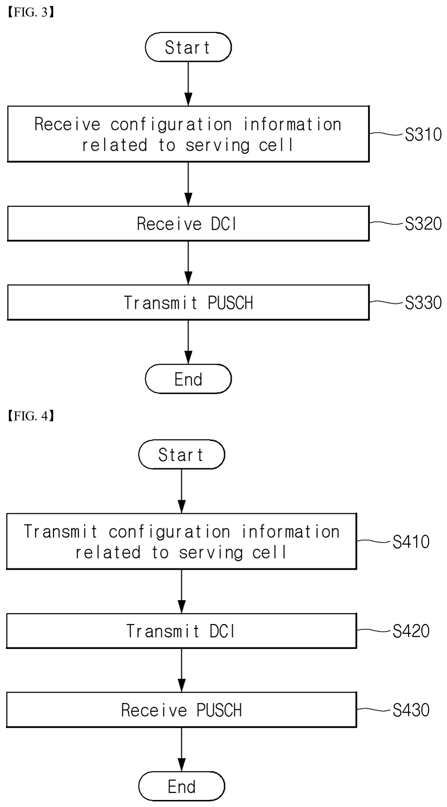

Below, the above-described embodiments are described in detail from a UE/BS operation perspective with reference to FIGS. 3 and 4. Methods described below are merely distinguished for convenience of explanation. Thus, it is obvious that partial configuration of any method can be substituted or combined with partial configuration of another method.

FIG. 3 is a flowchart illustrating a method performed by a UE according to an embodiment of the present disclosure.

Referring to FIG. 3, a method performed by a UE according to an embodiment of the present disclosure includes a step S310 of receiving configuration information related to a serving cell, a DCI reception step S320, and a PUSCH transmission step S330.

In the step S310, the UE receives configuration information related to a serving cell from a base station. The configuration information includes an ID of a first timing advance group (TAG) and an ID of a second TAG. For example, the configuration information may be based on a parameter ServingCellConfig.

In the step S320, the UE receives downlink control information (DCI) for scheduling of a physical uplink shared channel (PUSCH) from the base station.

For example, the DCI may be based on DCI format 0_0, DCI format 0_1 or DCI format 0_2.

For example, the PUSCH may be a dynamic grant (DG) PUSCH. The PUSCH may be scheduled based on the DCI. For example, the PUSCH may be a configured grant (CG) PUSCH. The PUSCH scheduling based on a configured grant (e.g., configured UL grant Type 2) may be activated based on the DCI.

In the step S330, the UE transmits the PUSCH to the base station based on an uplink timing related to one of the first TAG and the second TAG.

A TAG (i.e., the first TAG or the second TAG) related to the uplink timing may be determined based on at least one of the proposal 1, the proposal 2-1, and/or the proposal 2-2 described above. This is described in detail below.

The TAG related to the uplink timing may be determined based on i) a Sounding Reference Signal (SRS) resource, ii) a Physical Uplink Control Channel (PUCCH) resource, iii) an SRS resource indicator field of the DCI, or iv) a TAG configuration related to the PUSCH.

According to an embodiment, the TAG related to the uplink timing may be determined based on the Sounding Reference Signal (SRS) resource. The present embodiment may be based on the embodiment ① of the proposal 1, the embodiment ③ of the proposal 1, and/or the embodiment ① of the proposal 2-2.

The TAG related to the uplink timing may be associated with spatial relation info for the SRS resource. The spatial relation info for the SRS resource may refer to spatial relation information configured/activated to the SRS resource.

The SRS resource may be i) an SRS resource based on the SRS resource indicator field or ii) an SRS resource related to the configured grant.

According to an embodiment, the TAG related to the uplink timing may be determined based on an ID of a TAG mapped to a codepoint of the SRS resource indicator field. The present embodiment may be based on the embodiment ② of the proposal 1.

According to an embodiment, the TAG related to the uplink timing may be determined based on the PUCCH resource. Specifically, the TAG related to the uplink timing may be associated with spatial relation info for the PUCCH resource. The present embodiment may be based on the embodiment ① of the proposal 2-1. The DCI may be based on DCI format 0_0. The PUCCH resource may have a lowest ID within an active uplink (UL) BandWidth Part (BWP). For example, the spatial relation info for the PUCCH resource may mean an activated spatial relation configuration for the PUCCH resource among spatial relation configurations (e.g., list of spatial relation configurations) based on a PUCCH configuration (PUCCH-config).

According to an embodiment, the TAG related to the uplink timing may be determined based on a TAG configuration related to the PUSCH. The present embodiment may be based on the embodiment ② of the proposal 2-1. The DCI may be based on DCI format 0_0. An ID of a TAG for the PUSCH scheduled based on the DCI format 0_0 may be indicated based on the TAG configuration.

The above-described embodiments may be applied when a unified Transmission Configuration Indication (TCI) state for PUSCH transmission cannot be utilized/used. Specifically, the above-described embodiments may be applied when one of the TAGs for PUSCH transmission cannot be determined based on the unified TCI state.

For example, the unified TCI state may not be supported based on a capability of the UE. For example, the unified TCI state may not be configured in the UL BWP or a component carrier (CC) (or serving cell). In this case, a spatial relation (e.g., configuration of spatial relation, beam, spatial domain filter or UL TX spatial filter) related to the PUSCH may be based on the spatial relation info for the SRS resource or the PUCCH resource.

Specifically, the PUSCH may be transmitted based on the spatial relation info for the SRS resource or the PUCCH resource. As described above, the spatial relation info may refer to spatial relation information (e.g., parameter spatialRelationInfo) configured/activated to the SRS resource/PUCCH resource. If the unified TCI state is supported/configured, the parameter spatialRelationInfo is not configured. Conversely, if the unified TCI state is not supported/configured, the parameter spatialRelationInfo is configured. Hereinafter, a case where the unified TCI state is not configured/supported in the serving cell is described in detail.

The unified TCI state may not be configured in the serving cell. Specifically, a parameter (e.g., parameter unifiedTCI-StateType) indicating a type (e.g., joint or separate) of the unified TCI state may not be configured in the serving cell. The operation/configuration depending on whether the parameter unifiedTCI-StateType is configured is described below in detail.

For example, if the parameter unifiedTCI-StateType is set to 'joint', a list of joint TCI states (e.g., dl-OrJointTCI-StateList) for UL and DL operations may be configured in the serving cell. For example, if the parameter unifiedTCI-StateType is set to 'separate', a list of UL TCI states (e.g., ul-TCI-ToAddModList) for the UL operation and a list of DL TCI states (e.g., dl-OrJointTCI-StateList) for the DL operation may be configured in the serving cell. For example, if the parameter unifiedTCI-StateType is not set, a list of unified TCI states may not be configured in the serving cell.

The limitations related to the above-described case where the unified TCI state is not configured/supported are not intended to limit the scope of embodiments of the present disclosure. Specifically, even when the unified TCI state is utilized/supported/configured, the TAG for PUSCH transmission may be determined based on embodiments of the present disclosure.

The operations based on the steps S310 to S330 described above may be implemented by a device of FIG. 5. For example, a UE 200 may control one or more transceivers 230 and/or one or more memories 240 so as to perform the operations based on the steps S310 to S330.

Below, the above-described embodiments are described in detail from a perspective of base station operation.

Steps S410 to S430 described below correspond to the steps S310 to S330 described with reference to FIG. 3. Considering the above correspondence, redundant description is omitted. That is, the detailed description of the base station operation described below can be replaced with the description/embodiment of FIG. 3 corresponding to the base station operation.

FIG. 4 is a flowchart illustrating a method performed by a base station according to another embodiment of the present disclosure.

Referring to FIG. 4, a method performed by a base station according to another embodiment of the present disclosure includes a step S410 of transmitting configuration information related to a serving cell, a DCI transmission step S420, and a PUSCH reception step S430.

In the step S410, the base station transmits configuration information related to a serving cell to a UE.

In the step S420, the base station transmits downlink control information (DCI) for scheduling of a physical uplink shared channel (PUSCH) to the UE.

In the step S430, the base station receives the PUSCH from the UE based on an uplink timing related to one of a first TAG and a second TAG.

The operations based on the steps S410 to S430 described above may be implemented by a device of FIG. 5. For example, a base station 100 may control one or more transceivers 130 and/or one or more memories 140 so as to perform the operations based on the steps S410 to S430.

The operations/terms based on the above-described embodiments have been described assuming the 5G system. However, this is merely for convenience of explanation and is not intended to limit the scope of application of the technical problem and the problem solution to be solved by the present disclosure to a specific system. That is, the technical challenges/technical issues/problems mentioned in the present disclosure may equally exist in other systems (e.g., 6G system). It is obvious that embodiments of the present disclosure can be extended and applied to solve the same problems in the other systems. Therefore, for expanded application of embodiments of the present disclosure to other systems, terms defined/described based on the 5G system can be replaced/changed with terms defined in the other systems (or generalized terms not specific to one system).

A device to which an embodiment of the present disclosure is applicable (a device implementing the method/operation according to an embodiment of the present disclosure) is described below with reference to FIG. 5.

FIG. 5 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving configuration information related to a serving cell, wherein the configuration information includes an ID of a first Timing Advance Group (TAG) and an ID of a second TAG;
   receiving downlink control information (DCI) for scheduling of a Physical Uplink Shared CHannel (PUSCH); and
   transmitting the PUSCH based on an uplink timing which is related to one of the first TAG and the second TAG, wherein a TAG related to the uplink timing is determined based on a Sounding Reference Signal (SRS) resource.

2. The method of claim 1, wherein the TAG related to the uplink timing is determined based on i) the SRS resource, ii) a Physical Uplink Control CHannel (PUCCH) resource, iii) an SRS resource indicator field of the DCI, or iv) a TAG configuration related to the PUSCH.

3. The method of claim 2, wherein the TAG related to the uplink timing is associated with spatial relation info for the SRS resource.

4. The method of claim 3, wherein the SRS resource is i) an SRS resource based on the SRS resource indicator field or ii) an SRS resource related to a configured grant.

5. The method of claim 2, wherein the TAG related to the uplink timing is determined based on an ID of a TAG mapped to a codepoint of the SRS resource indicator field.

6. The method of claim 2, wherein the TAG related to the uplink timing is associated with spatial relation info for the PUCCH resource.

7. The method of claim 6, wherein the DCI is based on DCI format 0_0, and
   wherein the PUCCH resource has a lowest ID within an active uplink (UL) BandWidth Part (BWP).

8. The method of claim 2, wherein the DCI is based on DCI format 0_0, and
   wherein an ID of a TAG for the PUSCH scheduled based on the DCI format 0 0 is indicated based on the TAG configuration.

9. The method of claim 1, wherein the PUSCH is transmitted based on spatial relation info for the SRS resource or a PUCCH resource.

10. The method of claim 9, wherein a unified transmission configuration indication (TCI) state is not configured in the serving cell.

11. A user equipment (UE) comprising:

   one or more transceivers;
   one or more processors; and
   one or more memories connected to the one or more processors and storing instructions,
   wherein the instructions configure the one or more processors to perform all steps of a method according to any one of claims 1 to 10 based on being executed by the one or more processors.

12. A device comprising:

   one or more memories; and
   one or more processors operably connected to the one or more memories,
   wherein the one or more memories store instructions that configure the one or more processors to perform all steps of a method according to any one of claims 1 to 10 based on being executed by the one or more processors.

13. One or more non-transitory computer readable mediums storing instructions,
   wherein the instructions executable by one or more processors configure the one or more processors to perform all steps of a method according to any one of claims 1 to 10.

14. A method performed by a base station comprising:

   transmitting configuration information related to a serving cell, wherein the configuration information includes an ID of a first Timing Advance Group (TAG) and an ID of a second TAG;
   transmitting downlink control information (DCI) for scheduling of a Physical Uplink Shared CHannel (PUSCH); and
   receiving the PUSCH based on an uplink timing which is related to one of the first TAG and the second TAG,
   wherein a TAG related to the uplink timing is determined based on a Sounding Reference Signal (SRS) resource.

15. A base station comprising:

   one or more transceivers;
   one or more processors; and
   one or more memories connected to the one or more processors and storing instructions,
   wherein the instructions configure the one or more processors to perform all steps of a method according to claim 14 based on being executed by the one or more processors.

【FIG. 1】

| | |
|---|---|
| R   Timing Advance Command | Oct 1 |
| Timing Advance Command   UL Grant | Oct 2 |
| UL Grant | Oct 3 |
| UL Grant | Oct 4 |
| UL Grant | Oct 5 |
| Temporary C-RNTI | Oct 6 |
| Temporary C-RNTI | Oct 7 |

【FIG. 2】

| | |
|---|---|
| TAG ID   Timing Advance Command | Oct 1 |

【FIG. 3】

【FIG. 4】

【FIG. 5】

# EP 4 712 598 A1

## INTERNATIONAL SEARCH REPORT

International application No.

**PCT/KR2024/006417**

### A. CLASSIFICATION OF SUBJECT MATTER

**H04W 56/00**(2009.01)i; **H04W 72/0457**(2023.01)i; **H04W 72/1268**(2023.01)i; **H04W 72/231**(2023.01)i; **H04W 72/232**(2023.01)i; **H04B 7/0413**(2017.01)i; **H04B 7/06**(2006.01)i; **H04L 5/00**(2006.01)i

According to International Patent Classification (IPC) or to both national classification and IPC

### B. FIELDS SEARCHED

Minimum documentation searched (classification system followed by classification symbols)

H04W 56/00(2009.01); H04B 7/06(2006.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이밍 어드밴스 그룹(Timing Advance Group, TAG), 식별자(identifier), 상향링크 타이밍(uplink timing), 사운딩 참조 신호(Sounding Reference Signal, SRS) 자원(resource)

### C. DOCUMENTS CONSIDERED TO BE RELEVANT

| Category* | Citation of document, with indication, where appropriate, of the relevant passages | Relevant to claim No. |
|---|---|---|
| X | SHARP. Two TAs for multi-DCI. R1-2303179, 3GPP TSG RAN WG1 Meeting #112bis-e, e-Meeting. 07 April 2023. See sections 2.1-2.2. | 1-3,6,8-15 |
| Y | | 4-5,7 |
| Y | NTT DOCOMO, INC. Discussion on two TAs for multi-DCI. R1-2303698, 3GPP TSG RAN WG1 Meeting #112bis-e, e-Meeting. 07 April 2023. See section 2.3. | 4 |
| Y | MODERATOR (ERICSSON). Moderator Summary #1 on Two TAs for multi-DCI. R1-2304055, 3GPP TSG RAN WG1 Meeting #112bis-e, e-Meeting. 20 April 2023. See page 4. | 5 |
| Y | WO 2022-197065 A1 (SAMSUNG ELECTRONICS CO., LTD.) 22 September 2022 (2022-09-22) See claim 1. | 7 |
| A | WO 2023-080706 A1 (LG ELECTRONICS INC.) 11 May 2023 (2023-05-11) See claims 1-13. | 1-15 |

☐ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **29 August 2024** | **29 August 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

32

**INTERNATIONAL SEARCH REPORT**
Information on patent family members

International application No.

**PCT/KR2024/006417**

| Patent document cited in search report | | | Publication date (day/month/year) | Patent family member(s) | | | Publication date (day/month/year) |
|---|---|---|---|---|---|---|---|
| WO | 2022-197065 | A1 | 22 September 2022 | CN | 116998207 | A | 03 November 2023 |
| | | | | EP | 4292366 | A1 | 20 December 2023 |
| | | | | KR | 10-2023-0159845 | A | 22 November 2023 |
| | | | | US | 2024-0195483 | A1 | 13 June 2024 |
| WO | 2023-080706 | A1 | 11 May 2023 | KR | 10-2024-0100345 | A | 01 July 2024 |

Form PCT/ISA/210 (patent family annex) (July 2022)